# EUROPEAN PATENT APPLICATION

(11) **EP 1 544 529 A1**
(43) Date of publication of application: **22.06.2005**
(21) Application number: 04029677.4
(22) Date of filing: 15.12.2004
(51) Int. Cl.: F16L 21/035

(54) **Seal structure**

(30) Priority: 19.12.2003 JP 2003422163
(71) Applicant: Valeo Climatisation, 78321 Le Mesnil St Denis Cedex (FR)
(72) Inventor: Takano, Hakihiko, Osato Gun Saitama 360 0193 (JP)

(57) **Abstract**

For the sealing of a pair of members from which a CO2 refrigeration cycle is configured, the provision of a seal structure with both excellent permeability resistance with respect to a CO2 refrigerant and cold resistance.

Although a seal member 1 has on the one hand excellent permeability resistance with respect to a CO2 refrigerant but a relatively inferior cold resistance, by the prevention thereof of exposure at all times to the exterior air by the interposing between the exterior air side of a seal member 2 with a characteristic cold resistance, even if a loss of elasticity of the seal member 1 caused by low temperature occurs, leak of a large quantity of refrigerant is avoided. Simultaneously, the blow-by of a large quantity of refrigerant due to the pressure difference between the exterior air and refrigerant, and an increase in the quantity of leak during recovery to normal temperature caused by the generation of twist and warp in the seal members due to shock when blow-by occurs can be avoided.

## Description

The invention relates to a structure for the sealing of pipes or two members from which the refrigeration cycle of, for example, a car air conditioning device or the like is configured.

### [Prior Art]

In the connection of pipes or two members in a refrigeration cycle in which a C02 refrigerant is used as the heat exchange medium, in order to prevent leak of the C02 refrigerant to the exterior a sealing member of low permeability coefficient must be interposed between one pipe and another pipe or between the end surfaces of two members.

Although a butyl (IIR) based material or ethylene (ACM) based material has been considered for employment as the rubber material of small permeability coefficient, because sealing members configured from these rubber materials lack elasticity in cold environments when there is a marked drop in temperature due to their high relative density, they tend to be inferior from the viewpoint of cold resistance. For this reason, there are concerns that, for example, during winter in cold districts, shock from the exterior will be unable to be adequately absorbed by the sealing material and will result in the generation of gaps whereupon, even if the C02 medium does not permeate the seal material, it will leak through these gaps to the exterior.

In contrast to this, examples of materials with excellent cold resistance include hydrogenated nitrile (HNBR) based materials, fluorine (FKM) based materials and ethylene propylene based (EPDM) materials but, conversely, these tend to have a large C02 permeability coefficient. For this reason, there is a concern with the use of these materials that the C02 will permeate the sealing member and that leak of C02 will occur irrespective of the season or environment.

Because, as indicated, the adoption of a material for a single O-ring having a small C02 permeability coefficient and excellent cold resistance has been difficult, the adoption of a seal structure in which, by the assembly of two types of 0-rings of different characteristics, which is overall superior in terms of both permeability coefficient with respect to a C02 medium and cold resistance, has been considered.

With this in mind, as a seal structure configured by the assembly of two 0-rings of different characteristics, a refrigerant leak prevention device configured by the arrangement of a first O-ring on the atmospheric side of the seal part of the refrigerator that on the one hand has excellent gas barrier characteristics (gas permeability resistance) but has inferior blister resistance, and a second O-ring on the refrigerant side of the seal part of the refrigerator that on the one hand has inferior gas barrier characteristics but excellent blister resistance has been previously publicly disclosed (see Japanese Unexamined Patent Application No. 2001-4251).

However, the configuration of the leak prevention device for a refrigerator disclosed in the above-noted cited document 1 is characterized in that, in view of the fact that, if an O-ring of excellent gas permeability resistance (that is to say, small permeability coefficient) is arranged therein, because the refrigerant gas is unlikely to leak from the O-ring when the environment in which said O-ring is located is a high pressure environment even if the pressure of said environment is lowered as a result of pressure fluctuations of the refrigerant gas packed into the 0-ring, and a phenomenon (blister phenomenon) in which bubbles (air bubbles) are produced and cracking is generated in the O-ring will occur if a refrigerant gas of a higher pressure than this environment is retained in the O-ring, an O-ring of excellent blister resistance is arranged in the refrigerant side of the sealing part.

That is to say, by virtue of the fact that, in the above-described cited document, an O-ring that has on the one hand a small permeability coefficient and excellent gas permeability but inferior cold resistance is arranged in an environment exposed to the atmosphere, the inherent undesirable state caused by contact with cold air of the above-described cold environment is produced.

Thereupon, an object of the present invention is to provide a seal structure that has both excellent permeability and cold resistance with respect to a C02 refrigerant.

The seal structure pertaining to Claim 1, in which a plurality of seal members are interposed between a pair of members of which one has connection to the exterior air side and the other has connection to the exterior air opposing side to afford a seal between the abovementioned members, is characterized in that a first seal member of the abovementioned plurality of seal members is arranged on the exterior air opposing side of the abovementioned two members and the other seal member is arranged on the exterior air side of the abovementioned two members, wherein the abovementioned first seal member has a small permeability coefficient with respect to the desired fluid medium and the abovementioned other seal member has excellent cold resistance. It should be noted that, of the two members, the exterior air opposing side refers to, for example, the refrigerant fluid pipe side and, accompanying this, the fluid medium refers to the refrigerant or, more particularly, the C02 refrigerant.

A more specific example of the configuration of a seal structure is one employed for the sealing of a first pipe and another pipe in which the two pipes are sealed by the formation of a plurality of small diameter parts by reduction of the diameter of the open end part of the abovementioned first pipe and the external fitting of seal members on each of these small diameter parts, the formation of a large diameter part by the enlarging of the diameter of the open end part of the other pipe, and the fitting of each seal member between the small diameter part and small diameter part of the abovementioned first pipe and the other large diameter part of the other pipe, which seal structure is characterized in that a first seal member of the abovementioned seal members is arranged on the opposing side to the exterior air side of the two members and the other seal member is arranged on the exterior air side of the two members, and the abovementioned first seal member has a small permeability coefficient with respect to the desired fluid medium and the abovementioned other seal member has excellent cold resistance. It should be noted that, of the two members, the exterior air opposing side refers to, for example, the refrigerant fluid pipe side and, accompanying this, the fluid medium refers to the refrigerant or, more particularly, the C02 refrigerant.

An additional specific example of the configuration of the seal structure is one employed for the sealing of a first member and second member in which the two members are sealed by the formation of a plurality of annular grooves, into which the seal members are inserted, in the perimeter of the open section in the end surface of the abovementioned first member and the fitting of the abovementioned seal members between the annular grooves and the end surface of the other member facing the end surface of the abovementioned first member, which seal structure is characterized in that a first seal member of the abovementioned seal members is arranged on the opposing side to the exterior air side of the two members and the other seal member is arranged on the exterior air side, and the abovementioned first seal member has a small permeability coefficient with respect to the desired fluid medium and the abovementioned other seal member has excellent cold resistance. It should be noted that, of the two members, the exterior air opposing side refers to, for example, the refrigerant fluid pipe side and, accompanying this, the fluid medium refers to the refrigerant or, more particularly, the C02 refrigerant.

In addition, the abovementioned first seal member employs a butyl based material or ethylene based material as the material of small fluid medium permeability coefficient.

Furthermore, the abovementioned other seal member employs a hydrogenated nitrile material, fluorine based material or an ethylene-propylene based material as the material of excellent cold resistance.

As is described above, based on this invention, although the first seal member has on the one hand excellent C02 refrigerant permeability resistance but a relatively poor cold resistance, by virtue of the fact that the other seal member, which is characteristically cold resistant, is interposed between the exterior air side, exposure of the first seal member to the exterior air is continually prevented. For this reason, even if a loss of elasticity of the first seal member occurs at low temperature, leak of a large quantity of refrigerant can be avoided. Simultaneously, the blow-by of a large quantity of refrigerant due to the pressure difference between the exterior air and refrigerant and, in addition, an increase in the quantity of leak during recovery to normal temperature as a result of the generation of twist and warp in the seal member due to shock when blow-by occurs can be avoided.
Figure 1(a) shows a seal structure of the invention employed as a shaft seal, and Figure 1(b) shows the two seal members employed in Figure 1(a);
Figure 2 is a main part expanded view of the seal structure shown in Figure 1(a).
Figure 3 shows a different embodiment mode to that of Figure 1, Figure 3(a) shows a seal structure of the invention employed as the flat surface seal, and Figure 3(b) shows the two seal members employed in Figure 3 (a).

A description of a first example of an embodiment of the seal structure pertaining to the invention is given below with reference to the diagrams. It should be noted that the description given below pertains to the employment of 0-rings as the seal members 1 and 2.

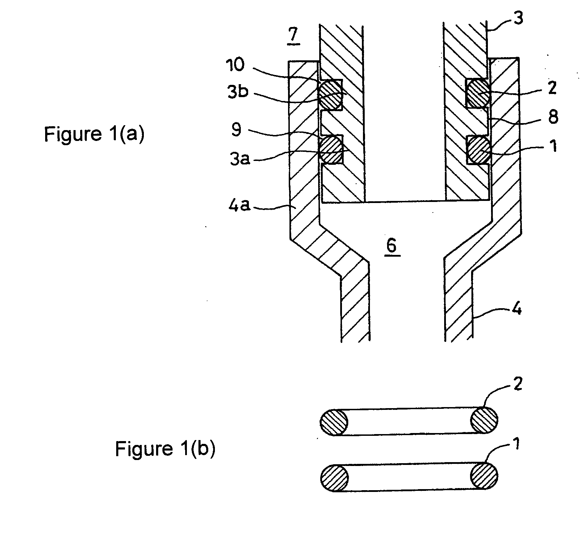

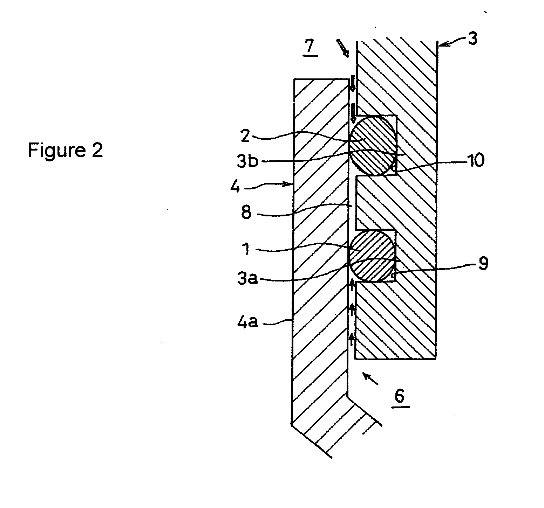

The embodiment shown in Figure 1 and Figure 2, in which the seal structure pertaining to the invention is employed for pipe connection between devices (not shown in the diagram) from which a refrigeration cycle in which a C02 refrigerant is employed is configured, provides an illustration of a shaft seal employed for preventing leak of a C02 refrigerant along the shaft direction of seal members 1 and 2 into a space 7 on the exterior air side by the interposing thereof in the section of connection of an open end part of one pipe 3 and an open end part of another pipe 4.

The abovementioned seal structure in this embodiment mode is one in which, as shown in Figure 1 (a), two small diameter parts 3a, 3b are formed by the reduction of the diameter in the open end part of the first pipe 3, seal members 1, 2 are exterior fitted into these small diameter parts 3a, 3b, and a large diameter part 4a is formed by the enlarging of the diameter in the open end part of the other pipe 4.

In addition, by the exterior fitting in such a way that the seal members 1, 2 and the open end part of the pipe 3 are covered by the large diameter part 4a, the seal members 1, 2 are caused to fit between the small diameter part 3a and small diameter part 3b of the pipe 3 and the large diameter part 4a of the pipe 4 whereupon, by the resultant compression of the seal members 1, 2 are compressed along the diametrical direction of said seal members 1, 2 and the utilization of the restoring force of the seal members 1, 2, a seal is formed between the two pipes 3, 4.

Incidentally, the seal member 1, which as shown in Figure 2 is arranged in the side of the seal structure that inter-connects with a flow passage 6 for the C02 refrigerant, is formed from a material that prevents the permeation of the C02 refrigerant. More specifically, the material employed for said purpose is a material with a small permeability coefficient with respect to the C02 refrigerant gas such as a butyl (IIR) based material or ethylene (ACM) based material.

In contrast therewith, the seal member 2, which as shown in Figure 2 is arranged in the side of the seal structure that inter-connects with the space 7 of the exterior air side, is formed from, for example, a material of excellent cold resistance that, even in cold temperatures of minus 30°C, neither hardens nor loses elasticity. More specifically, a hydrogenated nitrile (HNBR) based material, fluorine (FKM) based material or ethylene propylene (EPDM) based material or the like is employed.

In addition, by virtue of the fact that the seal member 1 and seal member 2 do not use the equal small diameter parts and are exterior fitted separately into different small diameter parts 3a, 3b, where the seal members 1, 2 are fitted between the small diameter part 3a and small diameter part 3b of the pipe 3 and the large diameter part 4a of the pipe 4 as described above, as shown in, in particular, Figure 2, two annular chambers 9, 10 inter-connected only by a small gap 8 between the seal members 1 and 2 are defined.

Because, based on a configuration such as this, the seal member 2 demonstrates the desired sealing characteristics even at times of low external temperature, there is no dramatic increase in the quantity of leak even if the seal member 1 hardens. In addition, the undesirable twist and warp caused by the blow-by of the refrigerant can be avoided. Furthermore, because the refrigerant pressure is comparatively low at times of low external temperature, the leak can be maintained at a level less than the desired quantity of leak using the seal member 2.

Based on the description given above, although the seal member 1 is comparatively inferior in terms of cold resistance at no time, because a seal member 2 of a characteristic cold resistance is interposed between the exterior air side, is it exposed to the exterior air. For this reason, even a loss of elasticity of the seal member 1 caused by low temperature occurs, the leak of a large quantity of refrigerant can be avoided. Simultaneously, the blow-by of a large quantity of refrigerant due to the pressure difference between the exterior air and refrigerant, and an increase in the quantity of leak during recovery to normal temperature caused by the generation of twist and warp in the seal members 1 and 2 due to shock when blow-by occurs can be avoided.

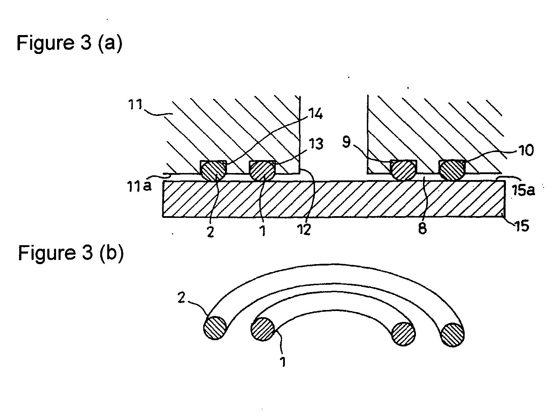

In contrast thereto, Figure 3 shows another embodiment mode of the seal structure, and this seal illustrates a structure for a flat surface seal structure for preventing leak of liquid in the diametrical direction with respect to the seal members 1, 2. It should be noted that for elements of the configuration the same as the previous embodiment identical symbols have been assigned and the description thereof has been omitted.

In this embodiment mode, annular grooves 13, 14 into which the seal members 1, 2 are fitted are formed in a pair in the perimeter of an open section 12 in the end surface 11a of a first member 11 in such a way as to form a concentric circle with respect to the center of the abovementioned open section 12, the seal members 1, 2 are fitted by the two members 11, 15 by the pressing of the end surface 11a of a first member 11 and the end surface 15a of an opposing other member 15 together in such a way as to cover the seal members 1, 2 sandwiched between the annular grooves 13, 14 and the open section 12 whereby, as a result, by the compression of the seal members 1, 2 along the shaft direction of the said seal members 1, 2 and the utilization of the restoring force of the seal members 1, 2, the space between the two members 11, 15 is sealed.

However, in this embodiment mode, the seal member 1 of small permeability coefficient with respect to a C02 refrigerant is arranged in an annular chamber 9 defined by the annular groove 13 and end surface 15a formed at the side that has inter-connection with the refrigerant fluid passage, and the seal member 2 of excellent cold resistance is arranged in an annular chamber 10 defined by the annular groove 14 and end surface 15a formed at the side that has inter-connection with the space 7 on the exterior air side.

Based on a configuration such as this, because the desired seal characteristics are demonstrated by the seal member 2 even at times of low external temperature, even if the seal member hardens no dramatic increase in the quantity of leak occurs. In addition, the undesirable twist and warp caused by blow-by of the refrigerant can be avoided. Furthermore, at times of comparatively low refrigerant pressure, the quantity of leak can be maintained below the desired quantity using the seal member 2.

Furthermore, in this embodiment mode, although the seal member 1 has relatively inferior cold resistance, by virtue of the fact that, the seal member 2 of characteristic cold resistance is interposed between the atmospheric side, the exposure thereof to exterior air is constantly prevented. For this reason, even if a loss of elasticity of the seal member 1 occurs the leak of a large quantity of refrigerant can be avoided. Simultaneously, the blow-by of a large quantity of refrigerant due to the pressure difference between the exterior air and refrigerant, and an increase in the quantity of leak during recovery to normal temperature caused by the generation of twist and warp in the seal members 1, 2 due to shock when blow-by occurs can be avoided.

It should be noted that, although the description given in these two embodiment modes is of cases in which one seal member 1 with permeability resistance to a C02 refrigerant and one seal member with cold resistance are employed, the invention is not necessarily limited thereto and, although not shown in the diagrams, a plurality of each may be arranged as appropriate.

## Claims

1. Seal structure in which a plurality of seal members are interposed between a pair of members of which one has connection to the exterior air side and the other has connection to the exterior air opposing side to afford a seal between the abovementioned members, **characterized in that** a first seal member of the abovementioned plurality of seal members is arranged on the exterior air opposing side of the abovementioned two members and the other seal member is arranged on the exterior air side of the abovementioned two members, wherein the above mentioned first seal member has a small permeability coefficient with respect to the desired fluid medium and the abovementioned other seal member has excellent cold resistance.

2. Seal structure employed for the sealing of a first pipe and another pipe in which the two pipes are sealed by the formation of a plurality of small diameter parts by reduction of the diameter in the open end part of the abovementioned first pipe and the external fitting of seal members on each of the small diameter parts, the formation of a large diameter part by the enlarging of the diameter in the open end part of the other pipe, and the fitting of the seal members between the small diameter part and small diameter part of the abovementioned first pipe and the other large diameter part of the other pipe, **characterized in that** a first seal member of the abovementioned seal members is arranged on the opposing side to the exterior air side of the two members and the other seal member is arranged on the exterior air side of the two members, and the abovementioned first seal member has a small permeability coefficient with respect to the desired fluid medium and the abovementioned other seal member has excellent cold resistance.

3. Seal structure employed for the sealing of a first member and second member in which the two members are sealed by the formation of a plurality of annular grooves, into which the seal members are inserted, in the perimeter of the open section in the end surface of the abovementioned first member and the fitting of the abovementioned seal members between the annular grooves and the end surface of the other member facing the end surface of the above mentioned first member, **characterized in that** a first seal member of the abovementioned seal members is arranged on the opposing side to the exterior air side of the two members and the other seal member is arranged on the exterior air side, and the abovementioned first seal member has a small permeability coefficient with respect to the desired fluid medium and the abovementioned other seal member has excellent cold resistance.

4. Seal structure according to any of Claims 1, 2 or 3, **characterized in that** the abovementioned first seal member employs a butyl based material or ethylene based material as the material of small fluid medium permeability coefficient.

5. Seal structure according to any of Claims 1, 2 or 3, **characterized in that** the abovementioned other seal member employs a hydrogenated nitrile based material, fluorine based material or an ethylene-propylene based material as the material of excellent cold resistance.
